# EUROPÄISCHE PATENTANMELDUNG

(11) **EP 0 531 927 A1**
(43) Veröffentlichungstag der Anmeldung: **17.03.1993**
(21) Anmeldenummer: 92115327.6
(22) Anmeldetag: 08.09.1992
(51) Int. Cl.: C08J 3/12, B01J 2/30, C08L 21/00

(54) **Formstabiler Schmelzhaftkleber und Verfahren zu seiner Herstellung**

(30) Priorität: 12.09.1991 DE 4130341
(71) Anmelder: Henkel KGaA, 40589 Düsseldorf (DE)
(72) Erfinder: Linder, Claus, Chem.-Ing., W-5142 Hückelhoven (DE); Gensch, Ingo, Chem.-Ing., W-5172 Linnich (DE)
(74) Vertreter: Cohausz & Florack Patentanwälte

(57) **Zusammenfassung**

Die Erfindung bezieht sich auf einen aus den Hauptbestandteilen Harz, Elastomer und Weichmacher bestehenden, formstabilen Schmelzhaftkleber in Form von bepuderten Pastillen oder von bepudertem Granulat. Der an der Oberfläche der Pastillen oder des Granulates haftende Puder ist ein schmelzfähiges und rezeptkonformes Elastomer. Vorzugsweise kompensiert das pulverförmige Elastomer einen Minderanteil des Elastomers im Schmelzhaftkleber.

## Beschreibung

Die Erfindung bezieht sich auf einen formstabilen Schmelzhaftkleber aus einer Rezeptur mit den Hauptbestandteilen Harz, Elastomer und Weichmacher mit einer seine adhäsive Oberfläche abdeckenden Umhüllung.

Die industriellen Verbraucher von Schmelzhaftkleber beziehen diesen entweder in Einwegfässern oder in Umkartons verpackt als formstabile Blöcke, deren Volumen wesentlich kleiner als das Volumen des Schmelzklebers in den Einwegfässern ist. Die Verarbeiter der Schmelzhaftkleber bevorzugen von diesen beiden Lieferformen die in Umkartons verpackten blockförmigen Schmelzhaftkleber, weil der Schmelzhaftkleber in dieser Form für die zur Verfügung stehenden Maschinen leicht handhabbar ist. Um den an seiner Oberfläche stark adhäsiven Schmelzhaftkleber aus den Umkartons leicht entnehmen zu können, sind die Umkartons innenseitig mit Silikon beschichtet. Solche beschichteten Umkartons sind jedoch aus Umweltschutzgründen nicht unproblematisch.

Der Erfindung liegt die Aufgabe zugrunde, einen transportfähigen und leicht handhabbaren Schmelzhaftkleber zu entwickeln, bei dem die für den Transport und die Handhabung notwendigen Mittel umweltverträglich sind.

Diese Aufgabe wird erfindungsgemäß dadurch gelöst, daß der aus einer Rezeptur mit den Hauptbestandteilen Harz, Elastomer und Weichmacher bestehende Schmelzhaftkleber pastilliert oder granuliert ist, daß die Umhüllung aus an der adhäsiven Oberfläche der Pastillen oder des Granulates anhaftendem, schmelzfähigem und rezeptkonformem Puder besteht, und daß der Puder ein Elastomer ist. Vorzugsweise besteht der rezeptkonforme Puder aus mindestens einer der in der Rezeptur enthaltenen Komponenten. Gute Ergebnisse werden erzielt, wenn der Anteil an Puder 5 % bis 20 %, insbesondere 10 %, der Gesamtkomponenten beträgt.

In völliger Abkehr von der bisherigen Lieferform wird der erfindungsgemäße Schmelzhaftkleber in Pastillen- oder Granulatform geliefert. Die Umhüllung aus an seiner Oberfläche anhaftendem Puder beeinträchtigt die Klebeeigenschaft des zu verarbeitenden Schmelzhaftklebers nicht, weil er zu der Rezeptur des Schmelzhaftklebers paßt und mit dem Aufschmelzen integraler Bestandteil des Schmelzhaftklebers wird. Da die Rezeptur des Schmelzhaftklebers als Hauptbestandteile Harz, Elastomer und Weichmacher umfaßt, ist der Puder ein Elastomer und sollte vorzugsweise das Elastomer des Schmelzhaftklebers, sein. Optimale Ergebnisse erhält man, wenn das puderförmige Elastomer einen Minderanteil des Elastomers im Schmelzhaftkleber kompensiert.

Es ist zwar seit langem bekannt, schmelzfähige Produkte einschließlich solcher mit adhäsiver Oberfläche zu pastillieren und die Pastillen mit adhäsiver Oberfläche durch Bepudern oder Sprühumhüllen nachzubehandeln, damit sie nicht aneinanderkleben, doch hat man bisher diese Technik nicht bei Schmelzhaftklebern angewandt. Offenbar befürchtete man Qualitätseinbußen, wenn der Schmelzhaftkleber nicht in der vom Klebstoffhersteller eingestellten Rezeptur verbleibt, sondern beim Aufschmelzen der Puder in den Schmelzhaftkleber eingearbeitet wird. Erst durch den Einsatz des rezeptkonformen Puders, insbesondere eines mit einem nicht klebfähigen Hauptbestandteil des Schmelzhaftklebers übereinstimmenden Puders entsprechend der Lehre der Erfindung, wurde ein formstabiler Schmelzhaftkleber mit nicht klebfähiger Oberfläche geschaffen, der in seiner Qualität durch den an seiner Oberfläche anhaftenden Puder nicht beeinträchtigt ist.

Gegenstand der Erfindung ist ferner ein Verfahren zum Herstellen eines formstabilen Schmelzhaftklebers gemäß Anspruch 1 mit einer seine adhäsive Oberfläche abdeckenden Umhüllung. Dieses Verfahren ist erfindungsgemäß dadurch gekennzeichnet, daß die Schmelze des Schmelzhaftklebers in Einzelvolumina von Tropfengröße aufgeteilt wird und die Einzelvolumina auf ein laufendes bepudertes Transportband abgelegt und danach die dabei gebildeten Pastillen überpudert werden, wobei als Puder eine an der adhäsiven Oberfläche der Pastillen anhaftende, schmelzfähige und rezeptkonforme Substanz verwendet wird, welche ein Elastomer ist, und daß die Pastillen nach Erstarren von überschüssigem Puder getrennt werden.

Im folgenden wird das erfindungsgemäße Verfahren anhand einer Zeichnung näher erläutert, die in schematischer Darstellung eine Anlage zum Pastillieren von Schmelzhaftkleber zeigt, und zwar in
- Fig. I: die Anlage in Seitenansicht und in
- Fig. II: die Anlage im Querschnitt.

Oberhalb eines gekühlten, endlosen, umlaufenden Transportbandes 1 sind in Transportrichtung hintereinander eine erste Auftragsvorrichtung 2 für Puder, eine Auftragsvorrichtung 3 für Schmelzhaftkleber und eine zweite Auftragsvorrichtung 4 für Puder angeordnet. An der Ablaufseite des Transportbandes 1 schließt sich eine Rutsche 5 an, die in eine Siebtrommel 6 einmündet. Am Ausgang der Siebtrommel 6 ist eine weitere Rutsche 7 angeordnet, die in einen Sammelbehälter 8 für Pastillen einmündet. Unterhalb der Siebtrommel 6 ist ein Sammelbehälter 9 für Puder angeordnet.

Das erfindungsgemäße Herstellungsverfahren von bepuderten Pastillen aus Schmelzhaftkleber wird mit einer solchen Anlage auf folgende Art und Weise durchgeführt:

Bei laufendem Transportband 1 wird aus einem Vorratsbehälter 2a der Auftragsvorrichtung 2 über eine Verteilerdüse 2b auf das Band ein Bett 10 aus Puder aus Elastomer aufgetragen. In dieses Puderbett 10 wird aus einem beheizten Vorratsbehälter 3a, der Schmelzhaftkleber als Schmelze 3b enthält, die Schmelze 3b mittels einer nicht dargestellten Dosiervorrichtung als Tropfen über eine Düse 3c abgelegt, die hier in Form von Pastillen 11 schnell erstarren. Es versteht sich, daß auch andere Dosiervorrichtungen für das Pastellieren, aber auch solche für die Herstellung eines Granulates verwendet werden können. Beim weiteren Transport gelangen die Pastillen 11 in den Bereich der Auftragsvorrichtung 4, mit der aus einem Vorratsbehälter 4a Puder aus Elastomer über eine Austragsdüse 4b aufgetragen wird. Dabei werden die Pastillen 11 von dem Puder 12 vollständig abgedeckt. Am Ende des Transportbandes 1 gelangen der Puder 10,12 und die Pastillen 11 über eine Rutsche 5 in die umlaufende Siebtrommel 6, wo die Trennung der nunmehr an ihrer adhäsiven Oberfläche mit Puder versehenen Pastillen 11 von dem überschüssigen Puder erfolgt. Der überschüssige Puder gelangt in den Sammelbehälter 9, während die Pastillen 11 über die weitere Rutsche 7 in den Vorratsbehälter 8 gelangen. Aus diesem Vorratsbehälter 8 werden die nunmehr nicht klebfähigen Pastillen in unbeschichtetes und damit auch umweltfreundliches Verpackungsmaterial, wie Säcke oder Kartons, abgefüllt.

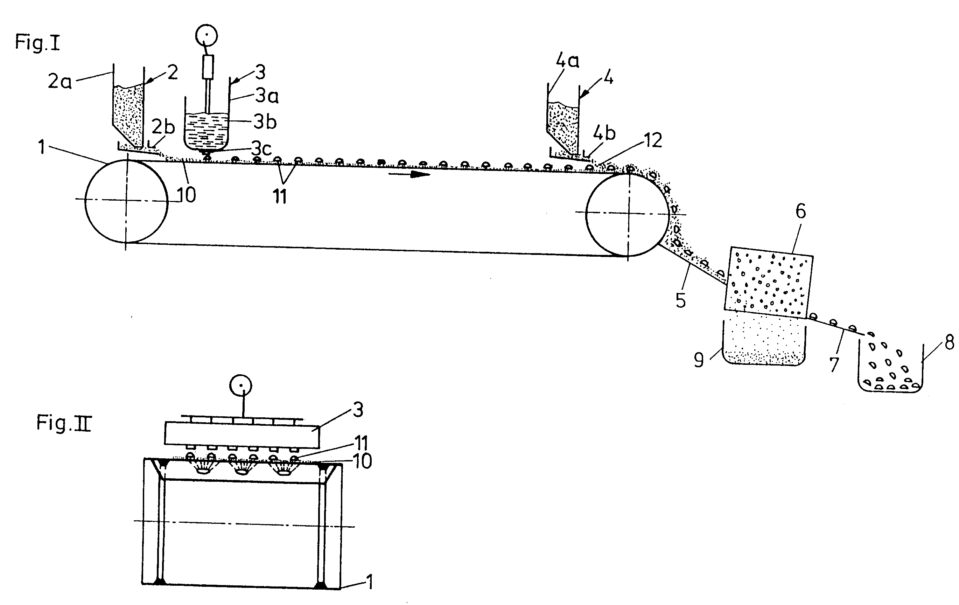

## Patentansprüche

1. Formstabiler Schmelzhaftkleber aus einer Rezeptur mit den Hauptbestandteilen Harz, Elastomer und Weichmacher und mit einer seine mit einer seine adhäsive Oberfläche abdeckenden Umhüllung, **dadurch gekennzeichnet,** daß der Schmelzhaftkleber pastilliert oder granuliert ist und die Umhüllung aus an der adhäsiven Oberfläche der Pastillen oder des Granulates anhaftendem, schmelzfähigem und rezeptkonformem Puder besteht, und daß der Puder ein Elastomer ist.

2. Formstabiler Schmelzhaftkleber nach Anspruch 1, **dadurch gekennzeichnet,** daß der rezeptkonforme Puder aus dem in der Rezeptur enthaltenen Elastomer besteht.

3. Formstabiler Schmelzhaftkleber nach Anspruch 2, **dadurch gekennzeichnet,** daß der Anteil an rezeptkonformem Puder 5 % bis 20 %, insbesondere 10 %, der Gesamtkomponenten beträgt.

4. Schmelzhaftkleber nach einem der Ansprüche 1 bis 3, **dadurch gekennzeichnet,** daß der Anteil an rezeptkonformem Puder einen Minderanteil des in der Rezeptur enthaltenen Elastomers kompensiert.

5. Verfahren zum Herstellen eines formstabilen Schmelzhaftklebers mit einer seine adhäsive Oberfläche abdeckenden Umhüllung nach einem der Ansprüche 1 bis 4, **dadurch gekennzeichnet,** daß die Schmelze des Schmelzhaftklebers in Einzelvolumina von Tropfengröße aufgeteilt wird und die Einzelvolumina auf ein laufendes, bepudertes Transportband abgelegt und danach die dabei gebildeten Pastillen überpudert werden, wobei als Puder eine an der adhäsiven Oberfläche der Pastillen anhaftende, schmelzfähige und rezeptkonforme Substanz verwendet wird, welche ein Elastomer ist, und daß die Pastillen nach ihrem Erstarren von überschüssigem Puder getrennt werden.
